# EUROPÄISCHE PATENTSCHRIFT

(11) **EP 1 207 000 B1**
(45) Veröffentlichungstag und Bekanntmachung des Hinweises auf die Patenterteilung: **01.03.2006**
(21) Anmeldenummer: 01124482.9
(22) Anmeldetag: 12.10.2001
(51) Int. Cl.: B23K 35/02, B23K 9/20

(54) **Schweissbolzen und Verfahren zu seiner Herstellung**
Welding stud and method of its manufacture
Goujon de soudage et procédé pour sa fabrication

(30) Priorität: 15.11.2000 DE 20019602 U
(43) Veröffentlichungstag der Anmeldung: 22.05.2002
(73) Patentinhaber: HILBIG SCHWEISSTECHNIK GmbH, D-21079 Hamburg (DE); IWS Institut für Werkstoffkunde und Schweisstechnik Service GmbH, 20099 Hamburg (DE)
(72) Erfinder: Seyen, Malte, Dipl.-Ing., 21079 Hamburg (DE); Junge, Heiko, Dipl.-Ing., 22763 Hamburg (DE)
(74) Vertreter: Hauck, Graalfs, Wehnert, Döring, Siemons

(56) Entgegenhaltungen:
- DE-U- 29 908 831
- DE-U- 29 911 121
- GB-A- 2 047 593
- US-A- 2 441 257
- US-A- 4 684 304

## Beschreibung

Die Erfindung bezieht sich auf einen Schweißbolzen nach dem Patentanspruch 1.

Insbesondere im Schiff- und im Karosseriebau ist bekannt, Befestigungsbolzen zu verwenden, um Bauteile und Komponenten daran anzubringen. Hierfür werden vorwiegend Schweißbolzen verwendet, die in bekannter Weise, beispielsweise durch Bolzenschweißtechnik, an einer Konstruktion befestigt werden. Derartige Bolzen weisen häufig ein Außengewinde oder auch ein Innengewinde auf für die Anbringung von Haltebauteilen, beispielsweise Muttern.

Es ist auch bekannt, statt des Lichtbogenschweißens zur Anbringung der Bolzen das Reibschweißverfahren anzuwenden.

In vielen Bereichen der Technik steht zunehmend der Leichtbau im Vordergrund. Hierbei haben sich insbesondere Aluminiumlegierungen als Werkstoffe durchgesetzt. Bei Leichtbaukarossen für Automobile, jedoch auch bei Kippmulden für Lastwagen, bei Omnibussen und Schienenfahrzeugen, und auch im Schiffbau, beispielsweise bei Schnellfähren und Yachten, werden Aluminiumlegierungen als Konstrulctionswerkstoff eingesetzt. Die Verwendung von Aluminiumlegierungen hat den Vorteil, das Gewicht zu reduzieren. Die Festigkeit der Aluminiumlegierungen liegt jedoch immer noch erheblich unter der des Stahls. Die mangelnde Festigkeit von Aluminiumlegierungen ist problematisch, wenn lösbare Verbindungen von Bauteilen miteinander erwünscht sind, beispielsweise die Anbringung von Türen an Automobilkarossen, oder beim Bau von Schnellfähren. Oft werden zur Realisierung derartiger Schnittstellen aufwändige Klammerverbindungen oder teure Flanschkonstruktionen aus Stahl ausgeführt.

Wegen der stark unterschiedlichen Schmelzpunkte von Leichtbauwerkstoffen einerseits und Stählen andererseits lässt sich eine schmelzschweißtechnische Verbindung von Schweißbolzen an Aluminiumkonstruktionen nicht durchführen. Einzige Möglichkeit der fügetechnischen Verarbeitung von Stahlbolzen in Leichtmetallkonstruktionen bietet das Reibschweißen. Das Reibschweißen erfordert jedoch sehr hohe Kräfte, die bei dünnen und somit leicht verformbaren Baugruppen (z.B. Bleche) leicht zu unerwünschten Verformungen führen.

Der Erfindung liegt die Aufgabe zugrunde, einen eine ausreichende Festigkeit aufweisenden Schweißbolzen zu schaffen, der vorteilhaft zur Anbringung an Konstruktionen aus Leichtmetall geeignet ist.

Diese Aufgabe wird durch die Merkmale des Patentanspruchs 1 gelöst.

Der erfindungsgemäße Schweißbolzen besteht aus einem Anschweißabschnitt und einem Funktionsabschnitt. Der Anschweißabschnitt ist aus Leichtmetall und der Funktionsabschnitt aus Stahl, wobei die Bolzenabschnitte fest miteinander verbunden sind.

Bei dem erfindungsgemäßen Schweißbolzen ist der Anschweißabschnitt artgleich oder artähnlich zum Leichtbauwerkstoff, an dem der Bolzen angeschweißt werden soll, zum Beispiel Aluminium gegen Aluminium. Hierzu können bereits existierende Verfahren des Bolzenschweißens mit Hubzündung sowie das Kondensatorentladungsschweißen angewendet werden. Naturgemäß kann auch das Reibbolzenschweißen oder Mittelfrequenzschweißen angewendet werden. Im Folgenden steht für:
- BH =: Bolzenschweißen mit Hubzündung/Kurzzeitbolzenschweißen
- CD =: Kondensatorentladungsschweißen
- RBS =: Reibbolzenschweißen
- MF =: Mittelfrequenzschweißen

Der Funktionsabschnitt, der nach einer Ausgestaltung der Erfindung ein Außen- und/oder ein Innengewinde aufweisen kann oder in sonstiger Weise zur Anbringung von Komponenten und Bauteilen ausgeführt ist, z.B. als Öse, Haken, Stift oder dergleichen, besteht aus dem höher belastbaren Stahl, beispielsweise Baustahl, hochlegierter Stahl usw. Bei der Erfindung wird mithin jeder Abschnitt des Schweißbolzens seiner Eignung entsprechend eingesetzt.

Die Bolzenabschnitte müssen in geeigneter Weise miteinander verbunden sein, damit sie die auftretenden Kräfte aufzunehmen in der Lage sind. Erfindungsgemäß weist der Funktionsabschnitt eine Spitze auf, die in einer komplementären Ausnehmung des Anschweißabschnitts sitzt, wobei Spitze und Ausnehmung durch eine Reibschweißverbindung verbunden sind. Eine derartige Geometrie sichert eine feste Verbindung zwischen den Bolzenabschnitten mit Hilfe einer Reibschweißverbindung. Schweißbolzen müssen nicht nur Zugspannungen widerstehen, sondern auch Biegebelastungen standhalten. Bei einer Verbiegung des weicheren Abschnitts, hier des Anschweißabschnitts, darf es nicht zu einem Aufbrechen der Schweißverbindung an der Verbindungsstelle kommen. Der erfindungsgemäße Schweißbolzen sichert auch insofern die ausreichende Verbindungsfestigkeit. Es ist zwar denkbar, Funktionsabschnitt und Anschweißabschnitt stumpf gegeneinander zu verschweißen (DE-U-29911121 ; DE-U-29908831), eine derartige Verbindungsstelle sichert jedoch keine ausreichende Verbindungsfestigkeit, insbesondere bei einer Biegebelastung.

Nach einer Ausgestaltung der Erfindung ist die Spitze kegelförmig, und nach einer weiteren Ausgestaltung der Erfindung weist die Spitze einen Winkel von 45° bis 120° auf, vorzugsweise von etwa 90°.

Wenn von "Spitze" gesprochen wird, dann schließt dies alle Geometrien ein, bei denen sich der Funktionsabschnitt zum Ende hin verjüngt, so daß ein Eindringen in das Material des Anschweißabschnitts erzielt wird. So kann das Ende der Spitze abgeplattet oder gerundet sein, wobei der Radius der Rundung oder Abplattung von den Bedingungen des Fertigungsverfahrens und/oder des Reibschweißverfahrens abhängt.

Der Funktionsabschnitt kann ein Außengewinde aufweisen und/oder ein Innengewinde. Der Anschweißabschnitt hat vorzugsweise am freien Ende eine das Anschweißen erleichternde Geometrie, wie z.B. eine Spitze oder eine Zündhilfe, eine prismatische Spitze oder dergleichen. Derartige Schweißvorbereitungen sind an sich bekannt.

Der Funktionsabschnitt besteht vorzugsweise aus Baustahl, legierten Stählen oder dergleichen.

Der Anschweißabschnitt besteht vorzugsweise aus Alummium oder Aluminiumlegierungen, Magnesium oder Magnesiumlegierungen oder Titan oder Titanlegierungen.

Der erfindungsgemäße Schweißbolzen kann vorzugsweise für Fahrzeugkonstruktionen, wie Automobilkarosserien oder dergleichen und im Schiffbau angewendet werden. Zur Anbringung des erfindungsgemäßen Schweißbolzens wird vorzugsweise ein Bolzenschweißen mit Hubzündung oder CD-Schweißen verwendet. Alternativ kann auch eine Anbringung durch Reibbolzenschweißen oder MF-Schweißen in Frage kommen.

Ein erfindungsgemäßes Verfahren zur Herstellung eines Schweißbolzens mit einem Anschweißabschnitt aus Leichtmetall und einem Funktionsabschnitt aus Stahl ist durch folgende Schritte gekennzeichnet:
- Der mit einer Spitze versehene Funktionsabschnitt und/oder der mit einem stumpfen Ende versehene Anschweißabschnitt werden um ihre Achse drehend angetrieben und auf eine hohe Relativdrehzahl gebracht.
- Nach Erreichen der gewünschten Drehzahl werden die axial zueinander ausgerichteten Abschnitte schlagartig mit hoher Relativgeschwindigkeit axial aufeinander zu bewegt derart, dass die Spitze in das stumpfe Ende des Anschweißabschnitts eindringt und das Material des Anschweißabschnitts trompetenförmig aufstülpt.

Die Relativdrehzahl der beiden Abschnitte ist sehr hoch, vorzugsweise bis zu 20000 U/min. und größer. Die Bolzenabschnitte werden nahezu explosionsartig aufeinander zu bewegt, sodass der Funktionsabschnitt aus Stahl mit seiner Spitze weit in den Anschweißabschnitt eindringt und ihn so verformt, dass er trompetenförmig aufgestülpt wird und den Funktionsabschnitt über eine bestimmte Strecke umschließt. Die Spitze bewegt sich um mindestens ihre Länge in das Material des Anschweißabschnitts hinein, vorzugsweise sogar um ein Mehrfaches des Durchmessers des Funktionsabschnitts.

Durch das beschriebene Verfahren wird aufgrund der Rotation und der Schlagenergie eine hohe flächenbezogene Presskraft an den Verbindungsflächen erhalten. Diese führt zu einer ausreichenden Aktivierung des Funktionsabschnitts im Bereich der Spitze, wobei die Geometrie der Spitze einer raschen Wärmeabfuhr entgegensteht. Die hohe Normalkraft zwischen Spitze und dem Material des Anschweißabschnitts entfernt unerwünschte Oxidschichten, welche in der Folge durch das erweichende Material des Anschweißabschnitts nach außen geführt werden, sodass zwischen der Spitzenfläche und der Fläche der komplementären Ausnehmung im Anschweißabschnitt eine wirksame Reibschweißverbindung hergestellt wird, die hohen Kräften standhält.

Nach einer Ausgestaltung der Erfindung ist es vorteilhaft, wenn der Durchmesser des Anschweißabschnitts größer ist als der des Funktionsabschnitts.

Der aufgestülpte Teil des Anschweißabschnitts wird anschließend abgearbeitet. Naturgemäß findet eine Schweißverbindung zwischen dem aufgestülpten Teil und dem vom aufgestülpten Teil umgebenen Abschnitt des Funktionsabschnitts nicht statt. Daher kann dieser Abschnitt durch drehende Abarbeitung entfernt werden. Dabei kann nach einer Ausgestaltung der Erfindung der an die Verbindungsstelle angrenzende Abschnitt des Anschweißabschnitts auf den Durchmesser des Funktionsabschnitts verringert werden. Das freie Ende des Anschweißabschnitts weist vorzugsweise einen größeren Durchmesser auf, um eine wirksame Schweißverbindung an einem Untergrund herbeizuführen.

Die Erfindung wird nachfolgend anhand von in Zeichnungen dargestellten Ausftihrungsbeispielen näher erläutert.
- Fign. 1 bis 3: zeigen Stufen des erfindungsgemäßen Verfahrens zur Herstellung eines Schweißbolzens.
- Fig. 4: zeigt eine weitere Ausführungsform eines Schweißbolzens nach der Erfindung.

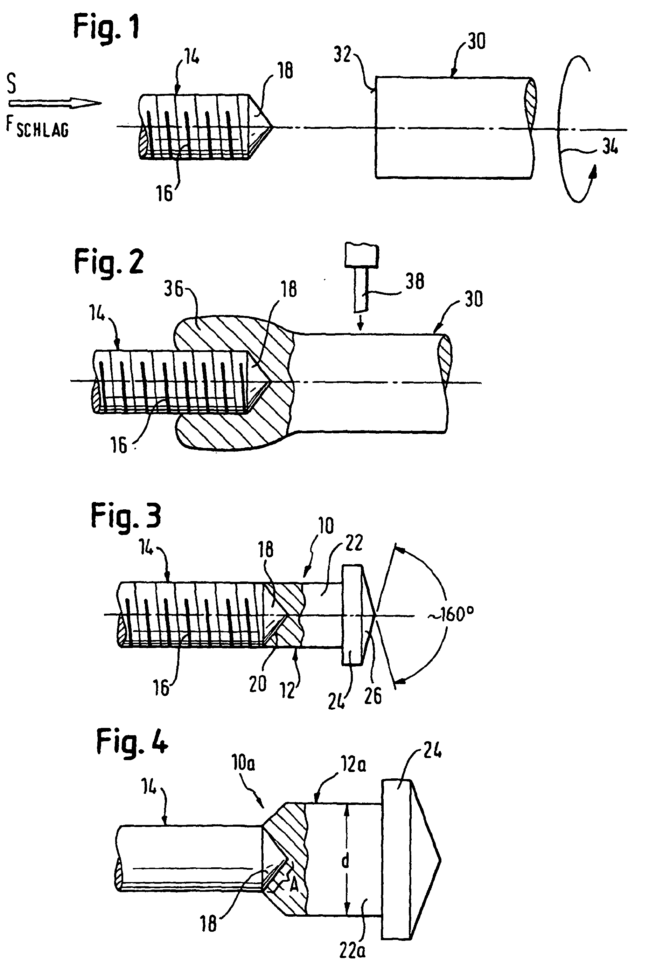

In Fig. 3 ist ein Schweißbolzen 10 zu erkennen, der aus einem Anschweißabschnitt 12 und einem Funktionsabschnitt 14 besteht. Er dient z.B. für das BH-Schweißen. Der Anschweißabschnitt 12 ist aus Leichtmetall, z.B. Aluminium und der Funktionsabschnitt 14 aus Stahl, beispielsweise Baustahl. Der Funktionsabschnitt 14 weist ein Außengewinde 16 auf sowie eine kegelige Spitze 18, die in einer komplementären Ausnehmung 20 des Anschweißabschnitts 12 einsitzt. Der Anschweißabschnitt 12 weist einen sich an den Funktionsabschnitt 16 anschließenden Schaft 22 auf, an welchen sich ein zylindrischer im Durchmesser erweiterter Kopf 24 mit einer kegeligen Spitze 26 anschließt. Der Kegelwinkel beträgt etwa 160°. Spitze 18 und Schaft 22 sind über eine Reibschweißverbindung fest miteinander verbunden. Das Verfahren zum Verbinden der Abschnitte 12, 14 wird anhand der Figuren 1 und 3 beschrieben.

Der Funktionsabschnitt 14 nach Fig. 3 ist in den Figuren 1 und 2 gleichermaßen zu erkennen. In Fig. 1 ist ferner ein Rohling 30 aus Aluminium dargestellt, der zylindrisch geformt ist mit einer stumpfen Endfläche 32. Sein Durchmesser ist größer als der Durchmesser des Funktionsabschnitts 14.

In einer nicht gezeigten Vorrichtung werden Funktionsabschnitt 14 und Rohling 30 im Abstand zueinander eingespannt, wobei die Achsen zueinander ausgerichtet sind. Der Rohling 30 wird mit hoher Drehzahl in Drehung versetzt, beispielsweise mit 20000 U/min. und mehr. Dies soll durch den Rundpfeil 34 angedeutet sein. Wenn die gewünschte Drehzahl erreicht worden ist, wird mit Hilfe einer nicht dargestellten Schlagvorrichtung auf den Funktionsabschnitt 14 eine Schlagkraft aufgebracht. Dadurch bewegt sich der Funktionsabschnitt 14 translatorisch mit hoher Geschwindigkeit auf die stumpfe Fläche 32 zu, und die Spitze 18 dringt in den Rohling 30 ein, wobei das Material des Rohlings 30 trompetenartig aufgestülpt wird, wie bei 36 in Fig. 2 dargestellt. Die Spitze 18 befindet sich um das Mehrfache ihrer Länge innerhalb des Rohlings 30, wobei der aufgestülpte Abschnitt 36 den Funktionsabschnitt 14 mit dem Gewinde 16 über eine gewisse Länge umgibt. Im Bereich der Spitze 18 findet aufgrund des beschriebenen Vorgangs eine Reibverschweißung mit dem Material des Rohlings 30 statt. Aufgrund der hohen Flächenpressung und Reibung werden die Materialien beider Abschnitte 12, 14 ausreichend aktiviert, sodass eine sichere Schweißverbindung erhalten wird, die auch hohen Biegekräften standhält. Der beschriebene Schweißvorgang bringt nicht nur die Stahlspitze 18 auf eine ausreichende Temperatur, sondern es wird auch verhindert, dass durch Oxidbildung und andere Vorgänge im Bereich der Grenzfläche des Rohlings 30 andere verbindungsfeindliche Phänomene auftreten.

Nachdem die Schweißverbindung hergestellt worden ist, wird durch ein entsprechendes abtragendes Formgebungsverfahren der Rohling 30 abgearbeitet und der Anschweißabschnitt 12 nach Fig. 3 gebildet. Hierzu gehört auch die Entfernung des aufgestülpten Abschnitts 36, der zur Verbindung mit dem Funktionsabschnitt 14 nichts beiträgt. Wie zu erkennen, haben Funktionsabschnitt 14 und Schaft 22 annähernd gleichen Durchmesser, während der Kopf 24 einen deutlich größeren Durchmesser aufweist. Das formgebende Verfahren, beispielsweise Drehen, wird durch ein Drehwerkzeug 38 in Fig. 2 angedeutet.

In Fig. 4 ist ein Schweißbolzen 10a dargestellt mit einem Funktionsabschnitt 14, der beispielsweise wieder ein Gewinde haben kann und einem Anschweißabschnitt 12a.

Man erkennt, dass der Schaft 22a einen größeren Durchmesser aufweist als der Funktionsabschnitt 14 und der Kopf 24 wiederum im Durchmesser größer ausgeführt ist als der Schaft 22a. Die Herstellung der Verbindung zwischen den Abschnitten 14 und 12a erfolgt auf die gleiche Weise wie oben beschrieben.

## Patentansprüche

1. Schweißbolzen mit einem Anschweißabschnitt und einem Funktionsabschnitt, wobei der Anschweißabschnitt (12, 12a) aus einem Leichtmetall und der Funktionsabschnitt (14) aus Stahl besteht, der Funktionsabschnitt (14) eine Spitze (18) aufweist, die in einer komplementären Ausnehmung (20) des Anschweißabschnitts (12, 12a) sitzt und Spitze (18) und Ausnehmung (20) durch eine Reibschweißverbindung verbunden sind.

2. Schweißbolzen nach Anspruch 1, **dadurch gekennzeichnet, dass** die Spitze (18) kegelförmig ist.

3. Schweißbolzen nach Anspruch 2, **dadurch gekennzeichnet, dass** der Kegelwinkel 45° bis 120° beträgt, vorzugsweise etwa 90°.

4. Schweißbolzen nach einem der Ansprüche 1 bis 3, **dadurch gekennzeichnet, dass** der Funktionsabschnitt (14) ein Außengewinde (16) aufweist und/oder ein Innengewinde (28).

5. Schweißbolzen nach einem der Ansprüche 1 bis 4, **dadurch gekennzeichnet, dass** der Anschweißabschnitt (12, 12a) am freien Ende eine das Anschweißen erleichternde Geometrie aufweist wie eine Spitze (18), eine Zündhilfe (26), oder eine prismatische Spitze.

6. Schweißbolzen nach einem der Ansprüche 1 bis 5, **dadurch gekennzeichnet, dass** der Anschweißabschnitt (12, 12a) aus Al oder Allegierung, Mg oder Mglegierung; oder Ti oder Tilegierung besteht.

7. Schweißbolzen nach einem der Ansprüche 1 bis 6, **dadurch gekennzeichnet, dass** der Funktionsabschnitt (14, 14a) aus Baustahl, oder legierten Stählen besteht.

8. Verfahren zur Herstellung eines Schweißbolzens, der aus einem Anschweißabschnitt aus Leichtmetall und einem Funktionsabschnitt aus Stahl besteht, **gekennzeichnet durch** folgende Schritte:
- der mit einer Spitze versehene Funktionsabschnitt und/oder der mit einem stumpfen Ende versehene Anschweißabschnitt bzw. Anschweißabschnitt-Rohling werden um ihre Achse drehend angetrieben und auf eine hohe Relativdrehgeschwindigkeit zueinander gebracht
- nach Erreichen der gewünschten Drehzahl werden die axial zueinander ausgerichteten Abschnitte schlagartig mit hoher Geschwindigkeit axial aufeinander zu bewegt derart,
- dass die Spitze in das stumpfe Ende des Anschweißabschnitts bzw. Anschweißabschnitt-Rohlings eindringt und das Material des Anschweißabschnitts trompetenartig aufstülpt.

9. Verfahren nach Anspruch 8, **dadurch gekennzeichnet, dass** die Spitze über eine Strecke von mehr als ihre Länge in das Material des Anschweißabschnitts eindringt.

10. Verfahren nach Anspruch 8 oder 9, **dadurch gekennzeichnet, dass** der Durchmesser des mit dem Funktionsabschnitts verschweißten Abschnitts größer ist als der des Funktionsabschnitts.

11. Verfahren nach einem der Ansprüche 8 bis 10, **dadurch gekennzeichnet, dass** der sich an den Funktionsabschnitt anschließende Teil des Anschweißabschnitts anschließend abgearbeitet wird, wodurch der Funktionsabschnitt bis zur Spitze freigelegt ist.

12. Verfahren nach Anspruch 11, **dadurch gekennzeichnet, dass** der sich an die Verbindungsstelle anschließende Abschnitt des Anschweißabschnitts auf den Durchmesser des Funktionsabschnitts abgearbeitet wird.

13. Verfahren nach einem der Ansprüche 8 bis 12, **dadurch gekennzeichnet, dass** die gewünschte Drehzahl bis zu 20000 U/min. oder mehr beträgt.

14. Verfahren nach einem der Ansprüche 8 bis 13, **dadurch gekennzeichnet, dass** der Anschweißabschnitt in Rotation versetzt und die schlagartige Kraft und die translatorische Bewegung auf den Funktionsabschnitt aufgebracht werden.

## Claims

1. A welding stud comprising a welding portion and a function portion, the welding portion (12, 12a) being of a light material and the function portion (14) being of steel, the function portion (14) having a tip (18) which engages a complementary recess (20) of the welding portion (12, 12a), and the tip (18) and the recess (20) being connected by a friction welding connection.

2. The welding stud of claim 1, wherein the tip (18) is conical.

3. The welding stud of claim 2, wherein the conical angle is between 45° and 120°, preferably approximately 90°.

4. The welding stud of one of the claims 1 to 3, wherein the function portion (14) has an outer thread (16) and/or an inner thread (28).

5. The welding stud of one of the claims 1 to 4, wherein the welding portion (12, 12a) at the free end has a geometry which facilitates a welding such as a tip (18) an ignition aid (26) or a prismatic tip.

6. The welding stud of one of the claims 1 to 5, wherein the welding portion (12, 12a) is of Al or an Al alloy, Mg or Mg alloy or Ti or a Ti alloy.

7. The welding stud of one of the claims 1 to 6, wherein the function portion (14, 14a) is of construction steel or an alloyed steel, respectively.

8. A method for the manufacture of a welding stud, which has a welding portion of light metal and a function portion of steel, **characterized by** the following steps:
- the function portion having a tip and/or the welding portion having a flat or obtuse and/or a blank of a welding portion is rotatably driven about its axis in order to achieve a high relative rotational speed
- after reaching the desired revolution the axially aligned portions are immediately moved axially towards each other with high speed such
- that the tip penetrates into the flat or obtuse end of the welding portion or the blank of the welding portion, respectively and the material of the welding portion is turned up into trumpet shape.

9. The method of claim 8, wherein the tip penetrates into the material of the welding portion about more than its length.

10. The method of claim 8 or 9, wherein the diameter of the portion welded to the function portion is larger than that of the function portion.

11. The method of one of the claims 1 to 10, wherein the portion of the welding portion joining to the function portion is subsequently machined whereby the function portion is exposed up to its tip.

12. The method of claim 11, wherein the portion of the welding portion joining to the connection location is machined down to the diameter of the function portion.

13. The method of one of the claims 8 to 12, wherein the desired revolution is up to 20000 rpm or more.

14. The method of one of the claims 8 to 13, wherein the welding portion is rotated and the impact like force and the translational movement is applied to the function portion.

## Revendications

1. Goujon de soudage avec une portion à souder et une portion de fonctionnement, la portion à souder (12, 12a) se composant d'un métal léger et la portion de fonctionnement (14) se composant d'acier, la portion de fonctionnement (14) présentant une pointe (18) qui repose dans un évidement complémentaire (20) de la portion à souder (12, 12a) et la pointe (18) et l'évidement (20) étant reliés par une liaison par soudage par friction.

2. Goujon de soudage selon la revendication 1, **caractérisé en ce que** la pointe (18) est conique.

3. Goujon de soudage selon la revendication 2, **caractérisé en ce que** l'angle du cône est compris entre 45° et 120°, se monte de préférence à environ 90°.

4. Goujon de soudage selon l'une quelconque des revendications 1 à 3, **caractérisé en ce que** la portion de fonctionnement (14) présente un filetage externe (16) et/ou un filetage interne (28).

5. Goujon de soudage selon l'une quelconque des revendications 1 à 4, **caractérisé en ce que** la portion à souder (12, 12a) présente une géométrie facilitant le soudage au niveau de son extrémité libre, telle qu'une pointe (18), un auxiliaire d'allumage (26) ou une pointe prismatique.

6. Goujon de soudage selon l'une quelconque des revendications 1 à 5, **caractérisé en ce que** la portion à souder (12, 12a) se compose d'Al ou d'un alliage en Al, de Mg ou d'un alliage en Mg ou de Ti ou d'un alliage en Ti.

7. Goujon de soudage selon l'une quelconque des revendications 1 à 6, **caractérisé en ce que** la portion de fonctionnement (14, 14a) se compose d'acier de construction ou d'aciers alliés.

8. Procédé de fabrication d'un goujon de soudage qui se compose d'une portion à souder en un métal léger et d'une portion de fonctionnement en acier, **caractérisé par** les étapes suivantes :
- la portion de fonctionnement pourvue d'une pointe et/ou la portion à souder ou l'ébauche de portion à souder pourvue d'une extrémité tronquée sont entraînées en rotation autour de leur axe et amenées à une vitesse de rotation relative élevée l'une par rapport à l'autre,
- après avoir atteint la vitesse de rotation souhaitée, les portions orientées de manière axiale l'une par rapport à l'autre sont déplacées brusquement à vitesse élevée de manière axiale l'une vers l'autre de sorte
- que la pointe pénètre dans l'extrémité tronquée de la portion à souder ou de l'ébauche de portion à souder et le matériau de la portion à souder est embouti par retournement à la manière d'une trompette.

9. Procédé selon la revendication 8, **caractérisé en ce que** la pointe pénètre sur une distance supérieure à sa longueur dans le matériau de la portion à souder.

10. Procédé selon la revendication 8 ou 9, **caractérisé en ce que** le diamètre de la portion soudée avec la portion de fonctionnement est supérieur à celui de la portion de fonctionnement.

11. Procédé selon l'une quelconque des revendications 8 à 10, **caractérisé en ce que** la partie se raccordant à la portion de fonctionnement de la portion à souder est ensuite enlevée, moyennant quoi la portion de fonctionnement est libérée jusqu'à la pointe.

12. Procédé selon la revendication 11, **caractérisé en ce que** la portion se raccordant au point de liaison de la portion à souder est enlevée au diamètre de la portion de fonctionnement.

13. Procédé selon l'une quelconque des revendications 8 à 12, **caractérisé en ce que** la vitesse de rotation souhaitée va jusque 20 000 tours/min ou plus.

14. Procédé selon l'une quelconque des revendications 8 à 13, **caractérisé en ce que** la portion à souder est mise en rotation et la force brusque et le mouvement de translation sont appliqués sur la portion de fonctionnement.
